# EUROPEAN PATENT SPECIFICATION

(11) **EP 3 707 082 B1**
(45) Date of publication and mention of the grant of the patent: **11.05.2022**
(21) Application number: 18796464.8
(22) Date of filing: 08.11.2018
(51) Int. Cl.: B65D 83/00, B01F 33/841, B01F 35/71, B01F 101/21

(54) **CONTAINER FOR DISPENSING FLUID**
BEHÄLTER ZUR AUSGABE EINES FLUID
RÉCIPIENT POUR DISTRIBUER UN FLUIDE

(30) Priority: 08.11.2017 EP 17382752; 08.11.2017 EP 17382755
(43) Date of publication of application: 16.09.2020
(73) Proprietor: Noustique Perfumes, S.L., 08006 Barcelona (ES)
(72) Inventor: JEDLINSKI, Jakub Jan, 00-730 Warszawa (PL); LASALA ALONSO, Hugo, 50006 Zaragoza (ES); SOLER COSTA, Juan Ramon, 50003 Zaragoza (ES); SUAREZ IRIBARNE, Alvaro, 08002 Barcelona (ES)
(74) Representative: ZBM Patents - Zea, Barlocci & Markvardsen
(86) International application number: PCT/EP2018/080546
(87) International publication number: WO 2019/092067

(56) References cited:
- WO-A1-2010/125208
- WO-A2-2016/087470
- US-A- 4 019 654
- US-A1- 2013 048 670
- US-A1- 2014 263 467
- US-A1- 2016 107 187

## Description

The invention relates to a container according to claim 1.

US 2013/048670 A1 discloses a container for storing a sensitive or aggressive product. The container comprises a hollow basic body made of natural glass. A plunger is arranged displaceably in the interior of the basic body. In order to seal the container so as to be diffusion-proof, the basic body is sealed at a distal out-let opening and at a proximal actuating opening by respective seals which can be removed and/or severed and are sealed in a materially bonded manner onto a supporting surface surrounding the particular opening. The seals can be sealed, in particular inductively, onto the respective supporting surfaces.

US 2016/107187 A1 discloses a method, computer program product, and apparatus for receiving, at a fluid dispensing apparatus, a control signal, wherein the control signal may be received from a base station, wherein the control signal, when received, may cause the fluid dispensing apparatus to perform operations. The operations may include generating a positive pressure within a fluid cartridge of the fluid dispensing apparatus by adjusting, via a motor of the fluid dispensing apparatus, a drive rod and piston of the fluid dispensing apparatus in a first direction relative to the fluid cartridge to dispense fluid in the fluid cartridge via a nozzle of the fluid dispensing apparatus. The operations may include generating a negative pressure within the fluid cartridge by adjusting, via the motor, the drive rod and piston in a second direction relative to the fluid cartridge to draw fluid into the fluid cartridge via the nozzle.

US 2014/263467 A1 discloses a container of the prior art.

It is the object of the present invention to at least partially overcome the problems associated with the prior art. It is a particular object of the present invention to provide a user of a dispensing device (especially a fragrance blending device) with reasonable priced and easy to use containers (especially fragrance containers) that allow to dispense their content in a particularly precise manner and / or that practically avoid loss of their content by evaporation etc. over a long time.

The object is achieved according to the features of the independent claim 1.

Advantageous embodiments can be found, e.g., in the dependent claims and/or in the description.

The object is achieved by a container according to claim 1.

By using the integrated needle to dispense fluid from the cavity, this container gives the advantage of a quasi-hermetical sealing of the cavity and thus practically avoids any significant evaporation losses over a long time. Also, the needle enables dispensing or releasing particularly precise amounts of fluid from the cavity to the outside of the container ("dosage"). Furthermore, fully housing the needle within the body avoids associating the container with conventional syringes used for medical purposes and also prevents users from being pricked. Additionally, the needle is particularly protected against external mechanical loads.

According to the invention, the cylindrical body has a longitudinal axis. In particular, the cylindrical body may be a linear body, consequently having a linear or straight longitudinal axis.

The cylindrical body may have a ring-like cross-sectional form perpendicular to the longitudinal axis, in particular such an inner contour. Alternatively, the cylindrical body may have a rectangular, square, oval etc. cross-sectional form.

In particular, the plunger may seal a gap between the inner wall of the hollow cylindrical body and the plunger ("sealing plunger"). Thus, fluid (i.e., liquid and/or gas) cannot pass between the plunger and the body. To this effect, the plunger may comprise one or more sealing elements (e.g. O-ring seals) that are pressed onto the inner side or inner wall of the hollow cylindrical body. The seals may be placed at a lateral side of the plunger.

Generally, the plunger may be a disk-shaped plunger. The plunger may be made of plastic and/or metal.

Preferably, the material of the sealing element(s) is resistant or inert to the content of the cavity. For example, if the content of the cavity is a fragrance or fragrance mix, it is advantageous that the at least one sealing element is resistant to the at least one solvent of the fragrance or fragrance mix, e.g. resistant to ethanol. Such a material may be polytetrafluoroethylene (PTFE).

At its outside, the plunger may have at least one protrusion or recession in order to be brought in mesh with a respectively formed rod or stem of a dispensing device. This gives the advantage of a high positional accuracy of the stem in relation to the plunger when the stem is brought into contact with the plunger. The recession may be a central blind hole, in particular tapered hole.

In particular, the longitudinal distance may be a distance along the longitudinal axis.

In particular, the plunger is movable between a first end position and a second end position. The first end position may be a position at which the plunger is located at a first end face of the hollow cylindrical body. The first end position may be the position at which the plunger has the greatest distance from the plug. Thus, in the first end position, the cavity has its largest volume. The first end position may be the position that is occupied when the container is new or unused. The second end position may be a position at which the plunger has a smaller distance from the plug compared to the first end position. Thus, in the second end position, the cavity has its smallest volume. The second end position may be a position at which the plunger contacts or nearly contacts the plug. Then, there is practically no usable volume left of the cavity.

The plug may be formed as a partition wall. The partition wall may be an integral part of the body.

The needle may be or comprise a hollow tube, in particular, a metal tube. The needle or the tube may be made of stainless steel. Using a metal needle gives the advantage that it can be produced in a particularly cost-efficient manner and with a particular high precision. Alternatively or additionally, the needle may be made of or with plastic, glass, or ceramics.

In particular, the needle may have a plastic volume providing a first section of the channel while the needle provides a second section of the channel. The needle may be inserted or seated in a through-hole of the plug in a sealed manner. In this case, the plug itself may not provide any other part of the channel.

That a free end of the needle is positioned outside the cavity may include that the free end is positioned on a side of the plug that is opposite to the side of the plug facing the plunger.

That the needle is fully housed within the hollow cylindrical body in particular includes that the needle is fully covered by the hollow cylindrical body if the hollow cylindrical body is viewed from the side, i.e. from a direction perpendicular to the longitudinal axis. In other words, the needle does not stick out of the hollow cylindrical body.

It is an embodiment that the free end of the needle is level, i.e. not bevelled. This gives the advantage that a possibility of a user being pricked is further reduced.

In general, the accuracy of the dosages / dispensing amounts and/or of the loss rate depends on the length and inner diameter of the needle.

It is an embodiment that the needle has an inner diameter of at least 0.35 mm, in particular of at least 0.4 mm, in particular of 0.41 mm. This embodiment makes use of the fact that the inner diameter of the needle co-determines accuracy of the amounts of fluid dispensed from the cavity as well as the evaporation rate. It was observed that, generally, the dispensing accuracy becomes higher with smaller inner diameters. However, for inner diameters smaller than about 0.35 mm, in particular smaller than 0.4 mm, problems occurred during dispensing regarding the formation of droplets so that, unexpectedly, the accuracy worsens with smaller inner diameter. In one case, this was measured for typical fragrances (e.g. perfume, cologne etc.) as the liquid to be dispensed through needles of a length of 0 mm, 12.7 mm, 25.4 mm and 38.1 mm.

Since the evaporation or loss rate of the fluid stored in the cavity increases with larger inner diameter of the needle, it is generally advantageous to limit the size of the inner diameter. It was found that an inner needle diameter of about 0.55 mm still gave a low loss rate. Thus, it is an advantageous embodiment that the needle has an inner diameter of not more than 0.55 mm, in particular of not more than 0.5 mm, in particular of not more than 0.45 mm.

In combination, an inner needle diameter in the range [0.45 mm; 0.40 mm], in particular of 0.41 mm, is especially advantageous.

It is an embodiment that the needle has a length of not more than 25 mm, in particular of not more than 20 mm, in particular of not more than 15 mm, in particular of not more than 13 mm, in particular of not more than 12.7 mm. This embodiment is based on the observation that the dispensing accuracy was significantly reduced for needles having a length of more than 25 mm, in particular 15 mm. Test were carried out with needles having lengths of, e.g., 0 mm, 12.7 mm, 25.4 mm and 38.1 mm. Their inner diameter was varied, e.g., between values of 0.15 mm, 0.25 mm, 0.41 mm, 0.51 mm, 0.84 mm and 1.54 mm.

It is an embodiment that the channel is entirely formed by the needle, e.g. as described above. This gives the advantage that the channel and/or the plug may be especially easy to manufacture.

It is another embodiment that only a section of the channel is formed by the needle. In particular, the channel may be formed in the plug as a recess starting at the cavity side of the plug. This section of the channel may be tapered towards the needle and merge with the needle at its small end. This embodiment is particularly robust and tight.

In one variant, the needle may be moulded into the plug. Alternatively, the needle is made by the moulding process.

It is an embodiment that the container comprises a handling region for handling the container, e.g. for removing the container from or inserting the container into the dispensing device. Alternatively or additionally, the handling region may be advantageous for attaching the container, e.g. to a dispensing device. To advantageously facilitate manual extraction of the container from a dispensing device and/or to improve grip on the container, the surface of the handling region may be structured, in particular by being dentate.

In an embodiment, the handling region is made of metal; and at least part of the hollow cylindrical part, the plunger, and the plug are made of plastic. The use of a metal handling region is advantageous to enable a mechanically more rigid and robust connection with a dispensing device compared to using a container having a plastic handling region. This, in turn, allows placing the container in the dispensing device with especially high precision. The use of a metal handling region is also advantageous to be able to make an electrical contact between the container and a dispensing device, in particular to provide an electrical signal with a stem of the dispensing device. The electrical signal received by a control unit or controller of the device may be interpreted as the start of dosing or dispensing. To achieve a particular accurate dosing, the linear speed of the stem may switch from approaching speed (fast speed) to dosing speed (slower speed) after the electric signal has been received. Additionally, the distance made by the stem till touching the top region of the container can be used to determine an amount of liquid remaining within the body, e.g. by correlating the position of the stem at which the electrical signal is received with the position of the plunger and thus with the volume of the cavity. This can be used as a position variable joined with other elements like light sensors for measuring the height of the plunger along the capsule body.

It is especially advantageous if the plastic is or contains POM, PET, HOPE and / or PC. Such a kind of plastic gives a high dimensional stability and also a high chemical resistance, especially against ethanol or other solvents, e.g. as found in fragrances. Alternatively, any of the body, the plunger and/or the plug or part thereof may be made of glass, ceramic or metal or a combination thereof, uncoated or coated.

It is an embodiment that the handling region is a metal region formed at the outer wall of the hollow cylindrical body. This advantageously facilitates handling of the container and facilitates extraction of the container from a dispensing device. To that effect, the handling region is in particular positioned at an end section ("top section") of the body that is opposed to an end section ("bottom section") at which the needle is positioned.

The handling region may be a metal ring positioned at the outer surface of the body. Alternatively, the handling region may be formed by a fully metal section of the body, in particular forming its top section.

It is an embodiment that at least some metal parts and plastic parts of the container (which are not movable against each other) have been formed by co-injection moulding. This gives the advantage that these metal and plastic parts or regions of the container are put together with negligible tolerances and very high stability. Also, the manufacture is particularly easy.

Generally, the inner surface of the body may be made of plastic or glass, at least at a section of the body that forms the cavity. This may be achieved by fully made of plastic or glass, at least at this section. Alternatively, this may be achieved by having an inner tube-like bushing made of plastic or glass, surrounded by an outer shell made of glass or plastic, respectively.

It is an embodiment that the body comprises at least one protrusion laterally protruding into or in front of an end face of the body neighbouring the plunger. The protrusion(s) prevent(s) the plunger from being taken out of the body. The protrusion may be implemented as a clip or other removable means. This end face may be the first end face. The plunger may be inserted into the body through this end face. Then, the clip or other removable means may be attached.

It is an embodiment that the container further comprises a spindle drive adapted to move the plunger along the longitudinal axis of the body. In particular, the longitudinal distance may be a distance along the longitudinal axis of the body.

This container gives the advantage that the need of an external push system to push a plunger into the body is removed. This reduces the cost of a dispensing device using these containers and achieves a higher dispensing accuracy than a push system because tolerances between the dispensing device and the container are practically eliminated.

In particular, the cylindrical body may be a body having a longitudinal axis. In particular, the cylindrical body may be a linear body, consequently having a linear or straight longitudinal axis. Alternatively, the cylindrical body may be curved.

The cylindrical body may have a ring-like cross-sectional form perpendicular to the longitudinal axis, in particular such an inner contour. Alternatively, the cylindrical body may have a rectangular, oval etc. cross-sectional form.

The spindle drive may comprise a gear rim which is preferably disk-shaped. The gear rim may have a ring-like dentate or teeth on its outwards facing side to enable fitting engagement with a rotary shaft.

In particular, the plunger is movable along the length of the body between a first end position and a second end position. The first end position may be the position at which the plunger has the greatest distance from the plug. Thus, in the first end position, the cavity has its largest volume. The first end position may be the position that is occupied when the container is new or unused. The second end position may be a position at which the plunger has a smaller distance from the plug compared to the first end position. Thus, in the second end position, the cavity has its smallest volume. The second end position may be a position at which the plunger contacts or nearly contacts the plug. Then, there is practically no usable volume left of the cavity.

The plug may be formed as a partition wall. The partition wall may be an integral part of the body.

It is an embodiment that the spindle drive is positioned within the body. This gives the advantage that a very compact and robust container is provided.

It is an embodiment that the spindle drive comprises a gear rim, a spindle fixedly connected to the gear rim, and the plunger, wherein the plunger is a threaded plunger in threaded mesh with the spindle. This provides an easy to build, cost-effective and precise spindle drive. In particular, the gear rim is stationary with respect to a longitudinal movement, i.e. it is not or not significantly moved towards the plug when engaged.

To release fluid, in particular liquid, from the container from the cavity, a rotatable shaft is brought into contact with the gear rim. The region of the shaft brought into contact may be called a "gear head". The contact brings the gear head in mesh with the rim such that a rotation of the shaft's gear head is followed by / transferred to the container's gear rim. This can be achieved with tight tolerances. Rotating the gear rim generates a similar rotation of the spindle. Since the plunger is in threaded engagement with the spindle and is placed in a non-rotating manner within the body, rotation of the spindle leads to a linear movement of the plunger along the spindle and therefore along the longitudinal axis of the body. The direction of this linear movement is determined by the sense of rotation. If the plunger is moved towards the plug, the cavity is compressed. This, in turn, effects that fluid is pressed through the channel and consequently released from the container. By specifying the angle of the rotation, a very precise linear movement of the plunger and thus a very precise dosage of the fluid can be achieved.

On its plug-side end (i.e. the end opposed to the gear rim), the spindle may be inserted in the plug in a freely rotating manner. Alternatively, the plug-side end of the spindle is a free end ending in the cavity.

It is an embodiment that, and wherein the gear rim is accessible at or from a first face end of the body while the channel opens towards a second face end of the body.

It is an embodiment that the plunger comprises a position detection element. This advantageously allows determining the position of the plunger within the body. This, in turn, allows determining the volume of the cavity and thus how much fluid is left in the container. The volume of the cavity may be determined by the dispensing device. To this effect, he dispensing device may comprise a position detector adapted to detect the longitudinal position of the position detection element within the container.

It is an embodiment that the position detection element is a magnet. This gives the advantage that the position of the plunger may be detected with a particularly simple arrangement. For example, the position of the magnet may be detected by a position detector using one or more electromagnetic sensors and/or reed switches.

It is another embodiment that the position of the plunger may be recorded and stored in a storage after each operation of the gear rim. Recording of the position may include calculating the position based on the rotation / turns of the gear rim and the known thread characteristics. The recorded data may be stored in a data storage of the container. The data storage may be an RFID tag. It may be the same RFID label or tag which is used to identify the container, its content etc.

It is an embodiment that the plunger comprises or is equipped with at least one sealing element. The sealing element(s) of the plunger prevent(s) leakage of fluid from the cavity through a gap between the plunger and the inner wall of the body and/or through a gap between the plunger and spindle. The gap between the plunger and the inner wall may be sealed by providing a perimetral sealing ring (e.g., an O-ring seal). The perimetral sealing ring also helps blocking rotation of the plunger during the rotation of the spindle while enabling linear movement along the spindle. This is particularly advantageous when using a circular plunger.

The gap between the plunger and the spindle may be sealed by providing a threaded sealing ring. The threaded sealing ring may be or comprise a piece of silicone pipe (VMQ) that is compressed due to the screwing process.

It is advantageous that the at least one sealing element is resistant to the fluid. If, for example, the fluid is a fragrance, the at least one sealing element is preferably resistant to the solvent(s) of this fragrance, e.g. resistant to ethanol. For example, the at least one sealing element may be made of or comprise polytetrafluoroethylene (PTFE).

It is an embodiment that the container comprises a handling region, preferably made of metal. The handling region is advantageous for handling the container (e.g. for removing the container from or inserting the container into the dispensing device). Alternatively or additionally, the handling region may be advantageous for attaching the container, e.g. to a dispensing device. To advantageously facilitate manual extraction of the container from a dispensing device and/or to improve grip on the container, the surface of the handling region may be structured, in particular by being dentate.

The use of a metal handling region is advantageous to enable a mechanically more rigid and robust connection with a handler (e.g. a user and/or the dispensing device) compared to using a container having a plastic attachment region. This, in turn, allows placing the container in the dispensing device with especially high precision.

It is an embodiment that the handling region is a metal ring positioned at an outer wall of the body. This advantageously facilitates handling of the container and facilitates extraction of the container from a dispensing device. To that effect, the attachment region is in particular positioned at an end section ("top section") of the body at which the gear rim is located. Alternatively, the attachment region may be formed by a fully metal section of the body, in particular forming its top section.

The hollow cylindrical body (in particular without considering the handling region) and/or the plug may also be made of plastic, in particular of or with a polymer with high dimensional stability and high chemical resistance, especially against ethanol or other solvents, e.g. as found in fragrances. The plastic may be POM, PET, HOPE and/or PC. Alternatively or additionally, the body may at least partly be made of glass or metal. The gear rim may be made of plastic or metal. At least part of the container may be coated, in particular areas that are exposed to the content of the cavity, e.g. with PTFE. However, generally, any of the gear rim, the body, the plunger and/or the plug may be made of glass, ceramic or metal, or a combination thereof, uncoated or coated.

It is an embodiment that at least some metal parts and plastic parts of the container (which are not movable against each other) have been formed by co-injection moulding. This gives the advantage that these metal and plastic parts or regions of the container are put together with negligible tolerances and very high stability. Also, the manufacture is particularly easy.

Generally, the inner surface of the body may be made of plastic or glass, at least at a section of the body that forms the cavity. This may be achieved by fully made of plastic or glass, at least at this section. Alternatively, this may be achieved by having an inner tube-like bushing made of plastic or glass, surrounded by an outer shell made of glass or plastic, respectively.

It is an embodiment that the container contains at least one ingredient or component of or for making a fragrance blend. Such at least one ingredient may by a certain fragrance, a fragrance mix and/or at least one solvent.

It is also disclosed a dispensing device for dispensing specific amounts of fluid, comprising at least one, or preferably at least two attachment means for removeably or exchangeably attaching respective containers as described herein; and at least one actuating device comprising at least one stem, wherein the at least one stem is movable to engage the respective container so as to release a respective amount of liquid via the needle. This dispensing device may in particular be adapted to dispense a fragrance blend mixed from the content of at least two containers housed in the dispensing device. The dispensing device may be embodied in analogy to the containers and give the same advantages.

The stem may be movable so as to engage and press the plunger of the respective container towards the plug. Alternatively, the stem may be a rotary shaft linearly movable to engage the spindle drive of the respective container and rotatable to move the plunger towards the plug by means of the spindle drive.

It is an embodiment that the attachment means is part of a cartridge to accommodate one or more containers. The attachment means may comprise or be a seat for a container formed in the cartridge. The cartridge may be a revolving cartridge. A container may be held by the attachment means by holding the handling region. The cartridge may be removable from the dispensing device.

After a container has been attached to (e.g., inserted into) an attachment means by the user, the at least one stem may be automatically moved towards the plunger, e.g. using a motor. Contact of the stem with the plunger may be detected by the dispensing device.

Each stem may be individually movable to, e.g. by an electric motor or other actuation device.

Optionally, when a user commands the dispensing device to dispense a blend mixed from the content of one or from the content of at least two containers (e.g., to dispense a perfume mixed from two or more containers into a bottle, a flacon, onto a test strip etc.), the dispensing device automatically operates the motors of the stem(s) to contact a respective plunger and then push it towards the plug. By pushing the plunger, pressure is built up in the cavity so that fluid present in the cavity flows through the channel to be released. The released amount of fluid is used as part of the blend. How far the at least one stem is moved depends on the amount of fluid content needed to produce the blend. If there is no push on the plunger, the needle and the sealed nature of the plunger effectively prevent loss of the fluid from the cavity.

The at least one stem may have an electrically conduction surface in order to enable an electrical contact with the handling region of the respective container. In particular, a contact pin may be integrated into the stem which is connected to the controller, e.g. via a wire that runs through an inside of the stem. In particular, the contact pin of the stem may contact the plunger, in particular its outside facing face. To this effect, the plunger may comprise a circular metallic plate as its top.

Advantageously, each stem is made of metal which gives the advantage of a particularly high stiffness.

Generally, the dispensing device may have several stems with each stem associated with a respective container. Alternatively, the dispensing device comprises at least one stem with each one stem associated with several containers. In the latter case, the several containers may be placed on one common platform, e.g. a rotating or revolving cartridge, such that the stem can move towards one container at a time and can switch between containers to be pushed.

In some embodiments, to release fluid, in particular liquid, from the container from the cavity, a gear head of the rotatable shaft is brought into contact with the gear rim. The contact brings the gear head in mesh with / couples the gear head with the gear rim. When the gear head is rotated, the spindle is rotated accordingly, and the threaded plunger moves along the spindle due to this rotation. By controlling the revolutions or the shaft, the amount of fluid released from the container can be controlled with a very high accuracy.

By moving the plunger towards the associated plug, pressure is built up in the cavity so that fluid present in the cavity flows through the channel. The released amount of fluid is used as part of the blend. How far the at least one rotary shaft is rotated depends on the amount of fluid content needed to produce the blend. If there is no rotation exerted on the gear rim, the needle and the sealed nature of the plunger effectively prevent loss of the fluid from the cavity.

After a container has been attached to (e.g., inserted into) an attachment means by the user, the at least one shaft may be automatically moved towards the gear rim of one of the containers, e.g. by using a motor. It is thus an embodiment that the dispensing device comprises at least one rotatable shaft which is linearly movable to engage the gear rim. Contact of the shaft with the gear rim may be detected by the dispensing device.

Each rotary shaft may be made of metal which gives the advantage of a particularly high stiffness.

The dispensing device may comprise a position detector adapted to detect the longitudinal position of the position detection element within the container. Alternatively, the dispensing device comprises an RFID reader/writer which is adapted to read an actual position from a data storage of an RFID tag of the container and which is adapted to write a new positon of the plunger into the storage after turning the gear rim. The new position may be calculated by the dispensing device based on the rotation.

Generally, the dispensing device may have several rotary shafts with each shaft associated with a respective container. Alternatively, the dispensing device comprises at least one rotary shaft, with each one rotary shaft associated with several containers. In the latter case, the several containers may be placed on one common platform, e.g. a rotating or revolving cartridge, such that the rotary shaft can actuate one container at a time. The dispensing device can switch between containers to be pushed.

The above described features and advantages of the invention as well as their kind of implementation will now be schematically described in more detail by at least one embodiment in the context of one or more figures.
- Fig.1: shows an oblique view of a dispensing device containing a container;
- Fig.2: shows a cross-sectional oblique view of a first example of a container for the device of Fig.1;
- Fig.3: shows the container of Fig.2 in another oblique view;
- Fig.4: shows a bottom view of the container of Fig.2;
- Fig.5: shows a cross-sectional side view of a top section of the container of Fig.2;
- Fig.6: shows an oblique view of a second example of a container for the device of Fig.1;
- Fig.7: shows another oblique view of a cut-out of the container of Fig.6;
- Fig.8: shows a cross-sectional oblique view of the container of Fig.6; and
- Fig.9: shows components of the container of Fig.6 housed in a hollow body of the container of Fig.6.

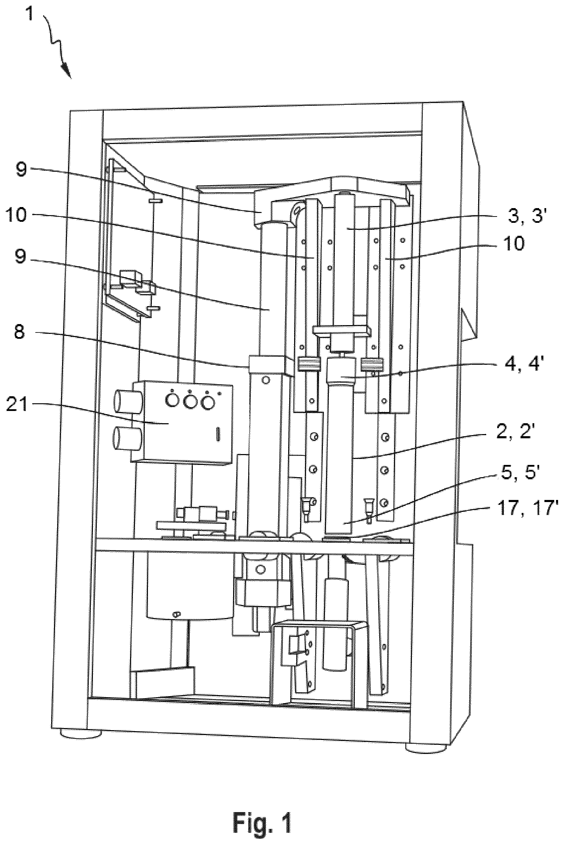

**Fig.1** shows an oblique view into an inside of a dispensing device 1 containing a container 2, 2'. There is only one container 2, 2' and one rod or stem 3, 3' shown while generally more than one container 2, 2' and/or more than one stem 3, 3' may be present.

The container 2, 2' is removeably attached to the dispensing device 1 by being inserted into a respective attachment means that may comprise a seat 17, 17'. The seat 17, 17' may be part of a cartridge (not shown) that houses several containers 2, 2'.

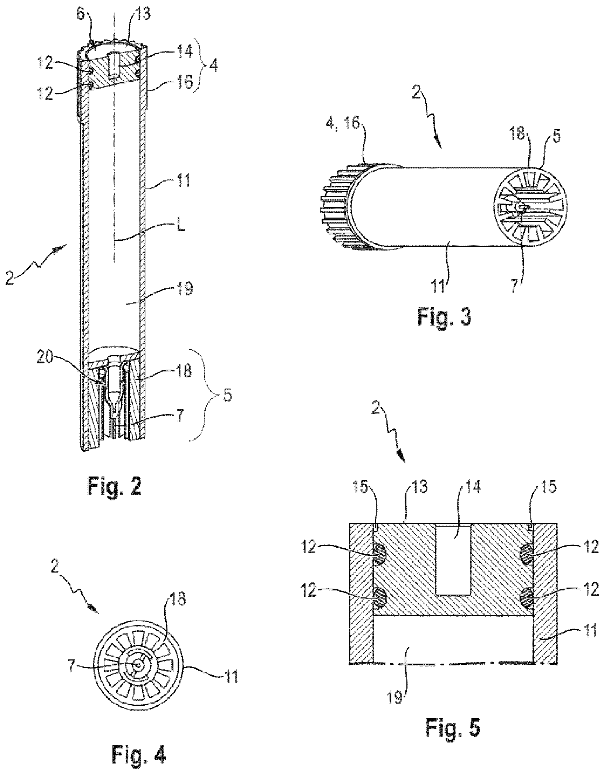

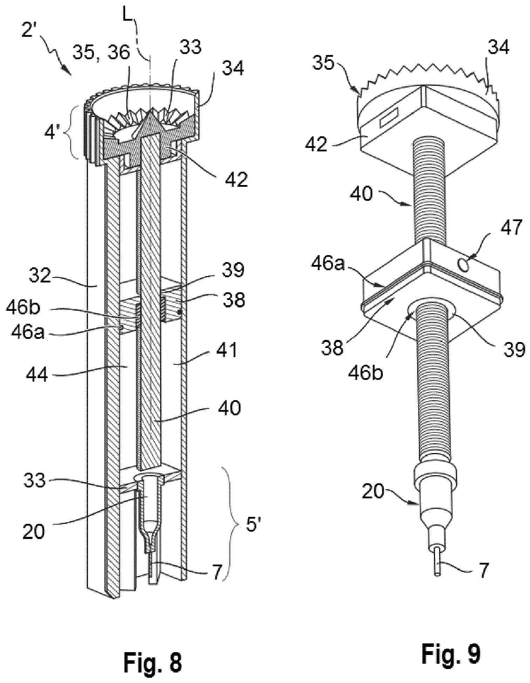

By virtue of the seat 17, 17', the container 2, 2' is fixed in a vertical orientation with a first end section 4, 4' above a second end section 5, 5'. The first end section 4, 4' faces the stem 3, 3'. The second end section 5, 5' comprises a needle 7 (see **Fig.2** and **Fig.8****).**

The longitudinal stem 3, 3' is located above the container 2, 2'. An electric motor 8 is used to linearly move the stem 3, 3', i.e. along its longitudinal axis. To this effect, the stem 3, 3' is connected to the motor 8 via a linkage 9. The linkage 9 comprises a guidance in form of rails 10 for a particularly precise movement of the stem 3, 3'.

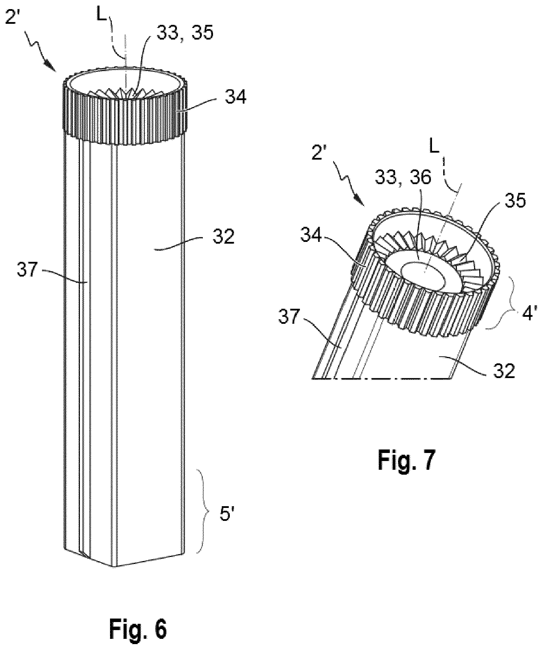

In some embodiments, such as shown for example in **Fig.2** to **Fig.5** described below, the stem may be movable so as to engage and press the plunger of the respective container towards the plug. Alternatively, such as for example in **Fig.6** to **Fig.9** described below, the stem may be a rotary shaft, linearly movable to engage a spindle drive of the respective container and rotatable to move the plunger towards the plug by means of the spindle drive.

For using the dispensing device 1, a user may insert a new container 2, 2' into the seat 17, 17'. If a cartridge is used, the user may fill the cartridge with containers 2, 2'. To facilitate replacement of the containers 2, 2', the cartridge may be removable from the dispensing device 1. A correct seating of the container 2, 2' may be detected by the dispensing device 1.

Additionally, the dispensing device 1 may comprise a reader 21 (e.g., a barcode reader, a QR code reader, an RFID reader, A NFC reader etc.) to read labels of the containers 2, 2'. The labels may contain information regarding the type of the containers 2, 2', the content of the containers 2, 2' etc., expiration dates etc. This information may be used by the dispensing device 1 to adjust settings, user choices etc. The reader 21 may also write new or modified information into the label for updating the position of the plunger, information about the liquid inside the container, dates, etc.

A user may choose to dispense a certain fluid, in particular a liquid, in particular a blend, in particular a fragrance blend, from the dispensing device 1. To this effect, the user may operate the dispensing device 1 via a man machine interface ("MMI", not shown) of the dispensing device 1 or remotely, e.g. via a mobile device (not shown). After the user has chosen a certain blend to be dispensed, the dispensing device 1 automatically selects containers 2, 2' needed to produce the chosen blend and automatically operates the stem 3, 3'. To this effect, different containers 2 may comprise different ingredients (e.g., pure ingredients or ingredient mixes). Selection of the containers 2, 2' may involve rotating the cartridge into a position in which one of the containers 2, 2' can be actuated by the stem 3, 3'. Different containers 2, 2' needed to produce the blend may be selected in a sequential manner, e.g. by rotating the cartridge into respective angular positions.

When a selected container 2, 2' is positioned below the dispensing device 1, the dispensing device 1 may automatically move the stem 3, 3' (which was in higher "rest position") towards the container 2, 2' in line with the stem 3, 3', i.e., downwards in the present embodiment. This contact may be detected by the dispensing device 1. If several stems 3, 3' and containers 2, 2' are present, the stems 3, 3' are moved for individual lengths. The stem 3, 3' moving in the downward direction engages with the container 2, 2' such that a respective amount of liquid may be caused to be released via the needle(s) 7, as will be described in greater detail further below.

The liquid gives out via the needle 7 may flow into a blending chamber (not shown) where it is mixed with other liquids to give the desired blend. The chosen blend may then be dispensed from the dispensing device 1, e.g. into a bottle (not shown). However, in general, there may also not be any kind of mixing chamber, but the content of a container 2, 2' is directly dispended into a final receptacle or onto a test strip in order to avoid scent contamination by previous blends.

To replace a spent container 2, 2' or to switch to another container 2, 2' during a blending process, the stem 3, 3' may be moved back into its rest position or moved to a replacement position.

In particular, the dispensing device 1 may be a fragrance blender. The container(s) 2, 2' may contain a fragrance, a mix of fragrances and/or solvent for being blended into a fragrance blend like a perfume, a cologne etc.

**Fig.2** shows a cross-sectional oblique view of the container 2 in its new or unused state. **Fig.3** shows the container 2 in an oblique view on the needle 7. **Fig.4** shows a bottom view of the container 2 with frontal view on the needle 7. **Fig.5** shows an enlarged cross-sectional side view of the first end ("top") section 4 of the container 2.

In the shown new state, the plunger 6 is located at a ("first") face of the first end section 4 of a hollow cylindrical body 11. The plunger 6 is movable inside the body along a longitudinal axis L, and the stem 3 of the device 1 may be movable downwards to push the plunger 6 downwards into the container 2. The plunger 6 has a basic cylindrical shape with two ring-like groves at its side. Two respective O-ring seals 12 are inserted into these groves that prevent leakage of fluid through a gap between the plunger 6 and the body 11. Thus, the plunger 6 may also be described as a sealing plunger. On its outward facing frontal side 13, the plunger 6 comprises a central blind hole 14 that may be used as a meshing means to achieve precise mesh with the stem 3. The plunger 6 may be made of plastic, metal, glass etc. or a combination thereof.

The plunger 6 may be inserted into the body 11 via the first face. To prevent the plunger 6 to slide out of the body 11, there may be a protrusion 15 that laterally protrudes into the hollow space of the body 11, see **Fig.5****.**The protrusion 15 may be removable, e.g. by being a clip.

At the first end section 4, the lateral outer surface of the body 11 is structured to provide a handling region. This can be achieved by structuring the outer wall or surface of the body 11 itself. In this case the outer wall may have a metallic layer. Alternatively, the handling region can be provided by attaching a ring 16 to the outer wall or surface of the body 11, as shown. The ring 16 may be made of metal. Alternatively, the first end section 4 is fully made of metal. In this case, the rest of the body 11 may be made of plastic.

At the second end section 5, the hollow inner space of the body 11 is blocked by a plug 18 ("sealing plug") in form of a partition wall. The plug 18 may be integrally manufactured with the body 11, i.e. as one common moulded part, or may be manufactured separately and then inserted into the body 11.

In a new container 2, the plunger 6 and the plug 18 are positioned apart from each other. The plunger 6, the body 11 and the plug 18 form a cavity 19. For example, the cavity 19 may have an initial volume of 20 ml. The cavity 19 may be filled with the fluid, e.g. a fragrance or fragrance mix.

A channel 20 leads through the plug 18. In the present embodiment, the channel 20 starts in the middle of the face of the plug 18 facing the cavity 19. After some length, the channel 20 is tapered, so that its diameter is reduced towards the needle 7. The channel 20 is fluidly connected to the needle 7 such that a free end of the needle 7 is positioned outside the cavity 19. Therefore, fluid can be dispensed from the container 2 by flowing through the channel 20 and through the needle 7. The needle 7 may also be regarded as section of the channel 20. In particular, the needle 7 may be fixed or held by the plug 18. In a variant, the channel 20 is entirely formed by the needle 7.

The needle 7 is fully housed within the hollow cylindrical body 11 and thus does stick out of the body 11. This prevents pricking by a user. To the same effect, the free end of the needle 7 is level.

To achieve a high dispensing accuracy and a low loss rate, the needle 7 has an inner diameter of at least 0.4 mm and of not more than 0.45 mm, in particular of 0.41 mm. Furthermore, the needle 7 has a length of about 12.7 mm. Generally, metal parts like the ring 16 and plastic parts like the body 11 and the plug 18 of the container 2 may be formed by co-injection moulding. The needle 7 may be inserted into a moulding tool before moulding.

**Fig.6** to **Fig.9** show a second embodiment of a container 2' that may be contained in the dispensing device of **Fig.1****,** in combination with a stem, analogous to stem 3 of the previous embodiment, but which in this case is a rotary shaft 3'. More than one container 2' and/or more than one stem in the form of a rotary shaft 3' may be present.
As shown in **Fig.1****,** the rotary shaft 3' is located above the container 2'. The electric motor 8 is used to linearly move the rotary shaft 3', i.e. along its longitudinal axis, via the linkage 9 and guided by the rails 10, until it contacts or engages the container 2'. Furthermore, the rotary shaft 3' is rotatable around its longitudinal axis, e.g. by another electric motor (not shown), and may comprise a gear head at its lower end.

When a selected container 2' is positioned below the rotary shaft 3', the dispensing device 1 may move the rotary shaft 3' (which was in higher "rest position") downwards until the rotary shaft 3' contacts a gear rim 33 of a spindle drive of the container 2', which will be described below. This contact may be detected by the dispensing device 1. After contact with the gear rim 33, the rotary shaft 3' may rotate the gear rim 33 such that a respective amount of liquid is given out via the needle 7.

**Fig.6** shows an oblique view of the container 2' of **Fig.1****.** The container 2' comprises a hollow cylindrical body 32 which, in the present embodiment, has a mostly square cross-sectional shape on its inner contour (inside) as well as on its outer contour (outside). Only at the top section 4, the cross-section is round. Thus, a gear rim 33 of a spindle drive inserted into the hollow body 32 at the top section 4 has a disk-like shape while an outer dentate handling region 34 is ring-like. The gear rim 33 may be made of metal or plastic. The handling region 34 may be made of plastic but is preferably made of metal.

The gear rim 33 is inserted into the hollow body 32 so that the top section 4 protects it. As shown in **Fig.7****,** the gear rim 33 has a dentate ring 35 at its outward facing face 36 to engage the gear head of the rotary shaft 3' in a locking mesh regarding rotation.

On its outside, the body 32 has two linear grooves 37 that are positioned on opposing sides and that are aligned parallel to a longitudinal axis L of the container 2'. The longitudinal axis L may be identical to the rotation axis of the gear rim 33.

**Fig.8** shows a cross-sectional oblique view of the container 2'. **Fig.9** shows components of the container 2' housed in the body 32 of the container 2'. The container 2' comprises a plunger 38 inserted into the body 32, the plunger 38 being movable along the longitudinal axis L of the body 32. To this effect, the disk-shaped plunger 38 comprises a threaded central hole 39 that is in threaded mesh with a threaded surface of a spindle 40. The spindle 40 is fixedly connected to the gear rim 33. By rotation of the gear rim 33, the spindle 40 is rotated in the same manner, thus leading to a linear movement of the plunger 38 along the longitudinal axis. To provide a simple way to prevent rotation of the plunger, an inner wall 41 of the body 32 as well as the plunger 38 have a rectangular, in particular square, cross-section. Alternatively, preventing rotation of the plunger could be also achieved using a descentration of the rotation axis or using joints for sealing and also for blocking the rotation movement. In these solutions, the manufacturability is easier due to the symmetric form of the cylindrical geometries.

To give positional stability to the gear rim 33 and/or the spindle 40, there is provided a rectangular base 42 just below the gear rim 33, through which the spindle is lead in a freely rotatable manner. The base 42 may be fixed with the body 32 or be an integral part of the body 32.

At the bottom section 5 the body 32 provides a plug 43 that is fixedly positioned within the body 32 at a longitudinal distance from the plunger 38. The plug 43 may be an integral part of the body 32. For example, the plug 43 may be formed as a partition wall.

The body 32, the plug 43 and the plunger 38 form a cavity 44 that contains content to be released through a channel 20 leading through the plug 43. Thus, the gear rim 33 is accessible at a first face end of the body 32 while the channel 20 opens towards a second face end of the body 32.

The channel 20 and the needle 7 may be made in one piece, e.g. by placing the metal needle 7 into a moulding form.

The channel 20 leads to the needle 7 such that the channel 20 is fluidly connected with the needle 7. A free end of the needle 7 is positioned outside the cavity 44 but is fully housed within the body 32. In particular, the needle 7 has an inner diameter of 0.41 mm and a length of 12.7 mm.

To prevent the content of the cavity 44 from passing the plunger 38, the plunger 38 comprises two seals, namely an O-ring-like seal 46a at its lateral surface and a threaded seal 46b positioned between the central hole 39 of the plunger 38 and the spindle 40. The seals 46a, 46b may be made of PTFE. However, a non-threaded seal may also be used if it exhibits elastic properties that conform the seal to the thread.

To be able to determine a position of the plunger 38 inside the body 32, e.g. for determining a remaining volume of the cavity 44, the plunger comprises a position detection element in form of a magnet 47. The magnet 47 is positioned at a lateral side of the plunger 38. The dispensing device 1 may be equipped with a position detector, e.g. a reed switch or a reed relay, to determine the position of the magnet 47 and thus the plunger 38.

To release fluid, in particular liquid, from the cavity 44, the rotary shaft 3' is brought into contact with the gear rim 33. Rotating the gear 33 rim generates a similar rotation of the spindle 40. This generates a linear movement of the plunger 38 towards the plug 43, thus compressing the cavity 44. This, in turn, effects that fluid is pressed through the channel 20 and through the needle 7 and consequently released from the container 2'. By specifying the rotation, a very precise linear movement of the plunger 38 and thus a very precise dosage of the fluid from the container 2' can be achieved.

Of course, the invention is not restricted to the described embodiments.

### List of Reference Signs

- 1: Dispensing device
- 2,2': Container
- 3, 3': Stem, rotary shaft
- 4, 4': First end section
- 5, 5': Second end section
- 6: Plunger
- 7: Needle
- 8: Motor
- 9: Linkage
- 10: Rail
- 11: Body
- 12: O-ring seal
- 13: Frontal side of the plunger
- 14: Blind hole
- 15: Protrusion
- 16: Ring
- 17, 17': Seat
- 18: Plug
- 19: Cavity
- 20: Channel
- 21: Reader
- 32: Body
- 33: Gear rim
- 34: Handling region
- 35: Dentate ring
- 36: Face
- 37: Groove
- 38: Plunger
- 39: Central hole
- 40: Spindle
- 41: Inner wall
- 42: Base
- 43: Plug
- 44: Cavity
- 46a: O-ring-like seal
- 46b: Threaded seal
- 47: Magnet
- L: Longitudinal axis

## Claims

1. A container (2; 2'), comprising:
- a hollow cylindrical body (11; 32);
- a plunger (6; 38) inserted into the body (11; 32), the plunger (6; 38) being movable along a longitudinal axis (L) of the body (11; 32);
- a plug (18; 43) fixedly positioned within the body (11; 32) at a longitudinal distance from the plunger (6; 38) such that the body (11; 32), the plug (18; 43) and the plunger (6; 38) form a cavity (19; 44);
- a channel (20) leading through the plug (18; 43); and
- a needle (7) fluidly connected with the channel (20), a free end of the needle (7) being positioned outside the cavity (19; 44);
said container (2; 2') being **characterised in that**:
- the needle (7) is fully housed within the hollow cylindrical body (11; 32).

2. The container (2; 2') according to claim 1 wherein the free end of the needle (7) is level.

3. The container (2; 2') according to any of the preceding claims wherein the needle (7) has an inner diameter of at least 0.4 mm, in particular of 0.41 mm.

4. The container (2; 2') according to any of the preceding claims wherein the needle (7) has an inner diameter of not more than 0.55 mm, in particular of not more than 0.5 mm, in particular of not more than 0.45 mm.

5. The container (2; 2') according to any of the preceding claims wherein the needle (7) has a length of not more than 15 mm, in particular of not more than 13 mm, in particular of not more than 12.7 mm.

6. The container (2; 2') according to any of the preceding claims wherein the channel is entirely formed by the needle (7).

7. The container (2) according to any of the preceding claims wherein:
- the container (2) comprises a handling region (16) for attaching the container (2), the handling region (16) being made of metal; and
- at least the hollow cylindrical part, the plunger (6), and the plug (18) are made of plastic.

8. The container (2) according to claim 7 wherein the handling region (16) is a metal ring positioned at the outer wall of the hollow cylindrical body (11).

9. The container (2) according to any of the claims 7 or 8, wherein metal parts and plastic parts of the container (2) have been formed by co-injection moulding.

10. The container (2) according to any of the preceding claims, wherein the body (11) comprises at least one protrusion (15) laterally protruding into or in front of an end face of the body (11) neighbouring the plunger (6).

11. The container (2') according to any of the preceding claims, wherein the container (2') further comprises a spindle drive (33, 38, 40) adapted to move the plunger (38) along the longitudinal axis (L) of the body (32).

12. The container (2') according to claim 11, wherein the spindle drive (33, 38, 40) is positioned within the body (32).

13. The container (2') according to any of the preceding claims 11 to 12, wherein:
- the spindle drive comprises a gear rim (33), a spindle (40) fixedly connected to the gear rim (33), and the plunger (38),
- the plunger (38) is in threaded mesh with the spindle (20), and
- the gear rim (33) is accessible at a first face end of the body (32) while the channel (20) opens towards a second face end of the body (32).

14. The container (2') according to any of the preceding claims 11 to 13, wherein the plunger (38) comprises a position detection element (47).

15. The container (2') according to claim 14, wherein the position detection element (47) is a magnet.

## Patentansprüche

1. Ein Behälter (2; 2'), umfassend:
- einen hohlen zylindrischen Körper (11; 32);
- einen Kolben (6; 38), der in dem Körper (11; 32) eingesetzt ist, wobei der Kolben (6; 38) entlang einer Längsachse (L) des Körpers (11; 32) bewegbar ist;
- einen Stopfen (18; 43), der innerhalb des Körpers (11; 32) in einer Entfernung vom Kolben (6; 38) in Längsrichtung feststehend positioniert ist, so dass der Körper (11; 32), der Stopfen (18; 43) und der Kolben (6; 38) einen Hohlraum (19; 44) bilden;
- einen Kanal (20), der durch den Stopfen (18; 43) führt; und
- eine mit dem Kanal (20) fluidverbundene Nadel (7), wobei ein freies Ende der Nadel (7) außerhalb des Hohlraums (19; 44) positioniert ist,
wobei der Behälter (2; 2') **dadurch gekennzeichnet ist, dass**:
- die Nadel (7) vollständig in dem hohlen zylindrischen Körper (11; 32) untergebracht ist.

2. Der Behälter (2; 2') nach Anspruch 1, wobei das freie Ende der Nadel (7) eben ist.

3. Der Behälter (2; 2') nach einem der vorhergehenden Ansprüche, wobei die Nadel (7) einen Innendurchmesser von mindestens 0,4 mm, insbesondere von 0,41 mm hat.

4. Der Behälter (2; 2') nach einem der vorhergehenden Ansprüche, wobei die Nadel (7) einen Innendurchmesser von nicht mehr als 0,55 mm, insbesondere von nicht mehr als 0,5 mm, insbesondere von nicht mehr als 0,45 mm hat.

5. Der Behälter (2; 2') nach einem der vorhergehenden Ansprüche, wobei die Nadel (7) eine Länge von nicht mehr als 15 mm, insbesondere von nicht mehr als 13 mm, insbesondere von nicht mehr als 12,7 mm hat.

6. Der Behälter (2; 2') nach einem der vorhergehenden Ansprüche, wobei der Kanal vollständig durch die Nadel (7) gebildet wird.

7. Der Behälter (2) nach einem der vorhergehenden Ansprüche, wobei:
- der Behälter (2) einen Handhabungsbereich (16) zum Anbringen des Behälters (2) umfasst, wobei der Handhabungsbereich (16) aus Metall besteht; und
- zumindest der hohle zylindrische Teil, der Kolben (6) und der Stopfen (18) aus Kunststoff bestehen.

8. Der Behälter (2) nach Anspruch 7, wobei der Handhabungsbereich (16) ein Metallring ist, der an der Außenwand des hohlen zylindrischen Körpers (11) angeordnet ist.

9. Der Behälter (2) nach einem der Ansprüche 7 oder 8, wobei Metallteile und Kunststoffteile des Behälters (2) durch gemeinsames Spritzgießen geformt worden sind.

10. Der Behälter (2) nach einem der vorhergehenden Ansprüche, wobei der Körper (11) mindestens einen Vorsprung (15) umfasst, der seitlich in oder vor eine Endfläche des Körpers (11) neben dem Kolben (6) vorsteht.

11. Der Behälter (2') nach einem der vorhergehenden Ansprüche, wobei der Behälter (2') ferner einen Spindelantrieb (33, 38, 40) umfasst, der angepasst ist, um den Kolben (38) entlang der Längsachse (L) des Körpers (32) zu bewegen.

12. Der Behälter (2') nach Anspruch 11, wobei der Spindelantrieb (33, 38, 40) innerhalb des Körpers (32) positioniert ist.

13. Der Behälter (2') nach einem der vorhergehenden Ansprüche 11 bis 12, wobei:
- der Spindelantrieb einen Zahnkranz (33) und eine Spindel (40) umfasst, die feststehend verbunden mit dem Zahnkranz (33) und dem Kolben (38) ist,
- der Kolben (38) in Gewindeeingriff mit der Spindel (20) steht, und
- der Zahnkranz (33) an einem ersten Flächenende des Körpers (32) zugänglich ist, während sich der Kanal (20) zu einem zweiten Flächenende des Körpers (32) öffnet.

14. Der Behälter (2') nach einem der vorhergehenden Ansprüche 11 bis 13, wobei der Kolben (38) ein Positionserfassungselement (47) umfasst.

15. Der Behälter (2') nach Anspruch 14, wobei das Positionserfassungselement (47) ein Magnet ist.

## Revendications

1. Un récipient (2 ; 2'), comprenant :
- un corps cylindrique creux (11 ; 32) ;
- un plongeur (6 ; 38) inséré dans le corps (11 ; 32), le plongeur (6 ; 38) étant mobile le long d'un axe longitudinal (L) du corps (11 ; 32) ;
- un bouchon (18 ; 43) positionné fixement à l'intérieur du corps (11 ; 32) à une distance longitudinale du plongeur (6 ; 38) de sorte que le corps (11 ; 32), le bouchon (18 ; 43) et le plongeur (6 ; 38) forment une cavité (19 ; 44) ;
- un canal (20) traversant le bouchon (18 ; 43) ; et
- une aiguille (7) en communication fluidique avec le canal (20), une extrémité libre de l'aiguille (7) étant positionnée à l'extérieur de la cavité (19 ; 44) ;
ledit conteneur (2 ; 2') étant **caractérisé en ce que** :
- l'aiguille (7) est entièrement logée à l'intérieur du corps cylindrique creux (11 ; 32).

2. Le récipient (2 ; 2') selon la revendication 1, dans lequel l'extrémité libre de l'aiguille (7) est de niveau.

3. Le récipient (2; 2') selon l'une quelconque des revendications précédentes, dans lequel l'aiguille (7) a un diamètre intérieur d'au moins 0,4 mm, en particulier de 0,41 mm.

4. Le récipient (2; 2') selon l'une quelconque des revendications précédentes, dans lequel l'aiguille (7) a un diamètre intérieur non supérieur à 0,55 mm, en particulier non supérieur à 0,5 mm, en particulier non supérieur à 0,45 mm.

5. Le récipient (2; 2') selon l'une quelconque des revendications précédentes, dans lequel l'aiguille (7) a une longueur d'au plus 15 mm, en particulier d'au plus 13 mm, en particulier d'au plus 12,7 mm.

6. Le récipient (2 ; 2') selon l'une quelconque des revendications précédentes, dans lequel le canal est entièrement formé par l'aiguille (7).

7. Le récipient (2) selon l'une quelconque des revendications précédentes, dans lequel :
- le conteneur (2) comporte une zone de manipulation (16) pour fixer le récipient (2), la zone de manipulation (16) étant en métal ; et
- au moins la partie cylindrique creuse, le plongeur (6) et le bouchon (18) sont en plastique.

8. Le récipient (2) selon la revendication 7, dans lequel la région de manipulation (16) est un anneau métallique positionné au niveau de la paroi extérieure du corps cylindrique creux (11).

9. Le récipient (2) selon l'une quelconque des revendications 7 ou 8, dans lequel des pièces métalliques et des pièces en plastique du récipient (2) ont été formées par moulage par co-injection.

10. Le récipient (2) selon l'une quelconque des revendications précédentes, dans lequel le corps (11) comprend au moins une saillie (15) faisant saillie latéralement dans ou devant une face d'extrémité du corps (11) voisine du plongeur (6).

11. Le récipient (2') selon l'une quelconque des revendications précédentes, dans lequel le récipient (2') comprend en outre un entraînement à broche (33, 38, 40) adapté pour déplacer le plongeur (38) le long de l'axe longitudinal (L) du corps (32).

12. Le récipient (2') selon la revendication 11, dans lequel l'entraînement à broche (33, 38, 40) est positionné à l'intérieur du corps (32).

13. Le récipient (2') selon l'une quelconque des revendications précédentes 11 à 12, dans lequel :
- l'entraînement à broche comprend une couronne dentée (33) et une broche (40) relié de manière fixe à la couronne dentée (33) et au plongeur (38),
- le plongeur (38) est en prise filetée avec la broche (20), et
- la couronne dentée (33) est accessible à une première extrémité de face du corps (32) tandis que le canal (20) débouche vers une seconde extrémité de face du corps (32).

14. Le récipient (2') selon l'une quelconque des revendications précédentes 11 à 13, dans lequel le plongeur (38) comprend un élément de détection de position (47).

15. Le récipient (2') selon la revendication 14, dans lequel l'élément de détection de position (47) est un aimant.
